# EUROPÄISCHE PATENTSCHRIFT

(11) **EP 1 601 709 B1**
(45) Veröffentlichungstag und Bekanntmachung des Hinweises auf die Patenterteilung: **21.07.2010**
(21) Anmeldenummer: 03813133.0
(22) Anmeldetag: 17.12.2003
(51) Int. Cl.: C08G 69/34

(54) **COPOLYAMIDE**
COPOLYAMIDES
COPOLYAMIDES

(30) Priorität: 17.12.2002 DE 10259048
(43) Veröffentlichungstag der Anmeldung: 07.12.2005
(60) Teilanmeldung: 09009517.5
(73) Patentinhaber: EMS-CHEMIE AG, 7013 Domat-Ems (CH)
(72) Erfinder: HOFFMANN, Botho, CH-7013 Domat/Ems (CH); HOFF, Heinz, CH-7015 Tamins (CH); LIEDLOFF, Hanns-Jörg, CH-7013 Domat/Ems (CH); KETTL, Ralph, CH-7417 Paspels (CH)
(74) Vertreter: Pfenning, Meinig & Partner GbR
(86) Internationale Anmeldenummer: PCT/EP2003/014364
(87) Internationale Veröffentlichungsnummer: WO 2004/055084

(56) Entgegenhaltungen:
- EP-A- 0 196 981
- EP-A- 0 508 054

## Beschreibung

Die vorliegende Erfindung betrifft teilkristalline, thermoplastisch verarbeitbare teilaromatische Copolyamide, die neben Terephthalsäure und mindestens einem aliphatischen Diamin H₂N-(CH₂)ₓ-NH₂ mit x = 4-18 noch mindestens eine dimerisierte Fettsäure mit bis zu 44 Kohlenstoffatomen enthalten und denen durch die Auswahl der Komponenten eine gegenüber vergleichbaren teilaromatischen Copolyamiden erhöhte Zähigkeit verliehen wird.

Teilkristalline, teilaromatische Copolyamide mit Hexamethylenterepthalamid-Einheiten neben anderen Amideinheiten wurden vor etwa 12 Jahren in den Markt eingeführt und gehören seitdem zum festen Bestand thermoplastisch verarbeitbarer Konstruktionswerkstoffe. Dank ihrer hohen Schmelzpunkte von bis zu ca.330°C zeichnen sich diese Produkte in Form ihrer glasfaserverstärkter Compounds durch eine sehr hohe Wärmeformbeständigkeit (HDT = Heat Distortion Temperature) aus. Zudem sind diese Produkte gegen viele aggressive Chemikalien auch bei vergleichsweise hohen Temperaturen noch beständig, was sie zusammen mit ihren hohen HDT-Werten für Anwendungen geeignet macht, die mit konventionellen Polyamiden, z.B. PA6 oder PA66, nicht mehr realisiert werden können.
Eingehend beschrieben sind diese Produkte, für die sich inzwischen die allgemein akzeptierte Bezeichnung "Polyphthalamide" eingebürgert hat, - zum Teil aber auch die Verfahren zu ihrer Herstellung - in zahlreichen Patentschriften, zum Beispiel in der US 4,603,166, US 4,831,108, US 5,098,940, US 5,302,691, WO 90/02017, WO 92/10525, WO 95/01389, EP 0 360 611 B1, EP 0 449 466 B1, EP 0 550 314 B1, EP 0 550 315 B1, EP 0 693 515 B1 und DE 43 29 676 C1.

Weitere Polyamide sind in der EP 0 508 045 A2 und der EP 0 196 981 A1 beschrieben.

Die insgesamt ausgezeichneten Eigenschaften der Polyphthalamide dürfen jedoch nicht darüber hinweg täuschen, dass es bei einigen ihrer Eigenschaften noch erheblichen Verbesserungsbedarf gibt. Insbesondere die Zähigkeit dieser Produkte, ausgedrückt durch ihre Schlag- und Kerbschlagzähigkeit, und häufig auch ihre Reißdehnung genügen nicht allen Anforderungen.

Daher ist es die Aufgabe der vorliegenden Erfindung, neuartige teilkristalline, thermoplastisch verarbeitbare, teilaromatische Copolyamide mit erhöhter Zähigkeit bereitzustellen. Als zweite Aufgabe der Erfindung soll die Polymerstruktur dieser Produkte dabei so abgeändert werden, dass keine Änderung des Herstellungsverfahrens notwendig wird, die erfindungsgemäßen teilaromatischen Copolyamide also nach den bekannten Verfahren des Standes der Technik hergestellt werden können. Diese Aufgabe wird durch die teilkristallinen, thermoplastisch verarbeitbaren, teilaromatischen Copolyamide nach den Ansprüchen 1 bis 5, die nach Anspruch 6 zur Herstellung von Formkörpern mittels thermoplastischer Verarbeitungsverfahren verwendet werden können, gelöst.

Gelöst wird diese Aufgabe mit Copolyamiden, die aus bestimmten ausgewählten Monomeren bzw. Vorkondensaten hiervon erhalten worden sind. Neben Terephthalsäure (Komponente a) wird, wenigstens eine dimerisierte Fettsäure b) mit bis zu 44 Kohlenstoffatomen eingesetzt sowie wenigstens ein aliphatisches Diamin der Formel H₂N-(CH₂)ₓ-NH₂ (Komponente c) worin x = 6 ist und, neben den Monomeren a), b) und c), Laurinlactam (f) oder ω-Aminododecansäure (f), wobei der Schmelzpunkt dieser Copolyamide, gemessen mittels DSC, mindestens 255 °C beträgt. Gegebenenfalls werden weitere Monomere d), e) (Ansprüche 2 und 3) eingesetzt. Das erhaltene Copolymer hat einen mittels DSC gemessenen Schmelzpunkt von höchstens 335°C.

Die vorstehend beschriebenen Monomeren Ausgangskomponenten a) bis c) und f) gegebenenfalls mit d) und e) werden dabei in solchen molaren Verhältnissen eingesetzt die zu Endprodukten führen die teilkristallin sind und einen Schmelzpunkt mittels DSC aufweisen der höchstens 335°C beträgt.

Nachfolgend werden die einzelnen Monomere näher beschrieben.

Die dimerisierten Fettsäuren b) werden aus monomeren ungesättigten Fettsäuren mit bevorzugt 18 Kohlenstoffatomen durch eine spezifische Oligomerisationsreaktion erhalten. Bedingt durch diese Reaktion entstehen neben einer ungesättigten dimerisierten auch kleinere Mengen der trimerisierten Fettsäure. Durch anschließende katalytische Hydrierung können die C-C-Doppelbindungen entfernt werden. Der Begriff "dimerisierte Fettsäure", wie er hier verwendet wird, bezieht sich auf beide Typen dieser Dicarbonsäuren, die gesättigten und die ungesättigten. Einzelheiten zur Struktur und den Eigenschaften der dimerisierten Fettsäuren finden sich im entsprechenden Merkblatt "Pripol C₃₆-Dimersäure" der Firma UNICHEMA (Emmerich, D) oder in der Broschüre der Firma COGNIS (Düsseldorf, D) "Empol Dimer and Polybasic Acids; Technical Bulletin 114C (1997*)*". Zur Herstellung von Polyamiden werden dimerisierte Fettsäuren mit einem Gehalt an trimerisierter Fettsäure von höchstens 3 Gew.-% verwendet. Es gibt sehr viele solcher Polyamide, die gewöhnlich sehr niedrig schmelzen oder gar keinen Schmelzpunkt aufweisen, hoch flexibel bis gummiartig sind und zur Herstellung flexibler Produkte wie Binder, Schuhkleber und Klebefilme verwendet werden. In der CA 861 620 sind derartige Produkte zum Beispiel beschrieben. Nur wenige, mit dimerisierten Fettsäuren modifizierte teilaromatische Copolyamide sind bekannt, die eine hohe Steifigkeit und Festigkeit aufweisen. Produkte dieses Typs sind zum Beispiel in der US 5,177,178 beschrieben, wobei es sich allerdings um amorphe Copolyamide handelt, die neben einer dimerisierten Fettsäure eine aromatische Dicarbonsäure und wenigstens ein cycloaliphatisches Diamin enthalten. Die Funktion der dimerisierten Fettsäure besteht hier darin, die Wasseraufnahme dieser amorphen Copolyamide zu verringern und die mit der Wasserabsorption verbundene Abnahme der Glasübergangstemperatur zu begrenzen (siehe Spalte 2, Zeile 18-23 und 48-54). In Spalte 4, Zeile 4-5 wird behauptet, die amorphen Copolyamide zeichneten sich durch eine hohe Schlagfestigkeit ("...high...impact resistance.")aus. Tatsächlich hat eine Überprüfung der Schlag- und Kerbschlagzähigkeit (Messmethoden: siehe unten) des Produktes nach Beispiel 1 gerade einmal Werte von 27 und 0,5 kJ/m² ergeben, was einem ausgesprochen spröden Bruchverhalten gleich kommt und nicht einmal den geringsten Anforderungen genügt. Die EP 0 469 435 B1 beansprucht ebenfalls dimerisierte Fettsäuren enthaltende amorphe Copolyamide, die sich von den Produkten der US 5,177,178 in der Struktur des verwendeten cycloaliphatischen Diamins unterscheiden. Mit den Schlag- und Kerbschlagzähigkeiten verhält es sich hier nicht viel anders als bei der US 5,177,178. Die Kerbschlagzähigkeiten der Copolyamide von Beispiel 3 und 4 werden mit 0,7 und 0,6 kJ/m² angegeben, die Schlagzähigkeiten von Beispiel 4 mit 35,3 kJ/m². Schließlich sagen die US 5,177,178 und die EP 0 469 435 B1 nichts über mögliche Effekte dimerisierter Fettsäuren als Bestandteil teilkristalliner, teilaromatischer Copolyamide aus. Letzteres gilt auch für die US 5,708,125, welche dimerisierte Fettsäuren als Cokomponenten von Vorkondensaten amorpher oder teilkristalliner teilaromatischer Copolyamide zwar zulässt, aber weder solche Beispiele enthält noch irgendwelche Angaben über die Eigenschaften möglicher polymerer Endprodukte macht.

Gegebenenfalls können die erfindungsgemäßen Copolyamide eine weitere aromatische Dicarbonsäure (d)), eine aliphatische Dicarbonsäure (e)) enthalten, wobei bei d) die Isophthalsäure, bei e) die Adipinsäure bevorzugt ist.

Der Schmelzpunkt der erfindungsgemäßen Copolyamide beträgt höchstens 335°C und für das erfindungsgemäße Copolyamid liegt er mindestens bei einer Temperatur von 255 °C.

Die vorliegende Erfindung betrifft teilaromatische Copolyamide, die aber nicht über ihren gesamten Zusammensetzungsbereich teilkristallin sind und mithin nicht immer einen Schmelzpunkt besitzen. Es ist deshalb angebracht, Kriterien anzugeben, die es erlauben, zwischen teilkristallinen und amorphen Copolyamiden zu unterscheiden und zusätzlich den Schmelzpunkt der teilkristallinen Produkte anzugeben. Bei den amorphen Polyamiden bietet diesbezüglich z.B. der Artikel "Structure Property Relationship in Amorphous Polyamides" von J.G. Dolden, erschienen in Polymer 1976, Vol. 17, Seiten 875 bis 892, wertvolle Hilfestellung. Die Vorhersage von Teilkristallinität teilaromatischer Copolyamide ist wenigstens für die Gruppe der sogenannten isomorphen Copolyamide sicher möglich. Beispiele derartiger Systeme sind PA-66/6T, PA-46/4T, PA-106/10T und PA-68/6PBDA auf Basis Hexamethylendiamin (HMD)/Adipinsäure (ADS)/Terephthalsäure (TPS) bzw. Tetramethylendiamin/ADS/TPS bzw. Decamethylendiamin/ADS/TPS und HMD/Suberinsäure/p-Benzoldiessigsäure (PBDA). Näheres dazu ist in zahlreichen Publikationen zu finden, z.B. bei H. Plimmer et al. in der Brit. Pat. Appl. 604/49, Imperial Chemical Industries Ltd. (1949); R. Gabler, CH-A-280 367, Inventa AG (1949); M. Levin und S.C. Temin, J. Polym. Sci. 49, 241-249 (1961); T. Sakashita et al. in der US 4,607,073, Mitsui Petrochemical Industries Ltd. (1985); bei S. Yamamoto und T. Tataka, EP 0 449 466 B1, Mitsui Petrochemical Industries sowie in Brit. Pat. Appl. 766 927, California Research Corporation (1954). Informationen über nicht-isomorphe Copolyamide, die in bestimmten Bereichen ihrer Zusammensetzung amorphe Strukturen aufweisen können, finden, sich in einigen der vorstehenden Publikationen und bei A.J. Yu und R.D. Evans, J. Am. Chem. Soc., 20 5261-5365 (1959) sowie F.B. Cramer und R.G. Beamann, J. Polym. Sci., 21, 237-250 (1956).

Sollte auf Grund der oben aufgeführten Publikationen und dort zitierter weiterer Arbeiten keine schlüssige Antwort möglich sein, ob eine gegebenes Copolyamid teilkristallin oder amorph ist oder welchen Schmelzpunkt es aufweist, so hilft ein Vorversuch zur Herstellung des betreffenden Produkts in einem kleinen Laborautoklaven weiter. Zu diesem Zweck werden die jeweiligen Komponenten zusammen mit Wasser vermischt und nach Spülen mit einem Inertgas im geschlossenen Autoklaven aufgeheizt. Nach Erreichen von 200 bis 230°C Produkttemperatur wird Wasserdampf durch Öffnen des Abgasventils abgelassen und unter weiterem Aufheizen auf 250 bis 290°C auf Umgebungsdruck entspannt. Dabei muss allerdings in Kauf genommen werden, dass im Verlauf dieser Prozedur höher schmelzende Copolyamide bei bestimmten Betriebszuständen spontan kristallisieren und den Rührer blockieren können. Das betreffende Produkt wird dem Autoklaven entnommen und mittels Differential Scanning Calorimetry (DSC) auf seinen Schmelzpunkt untersucht. Die DSC-Messung wird an ein- und derselben Probe zweckmäßigerweise ein- bis zweimal wiederholt, um eine definierte thermische Vorgeschichte des jeweiligen Copolyamids sicherzustellen. Im einfachsten Fall kann anstelle eines Autoklaven auch ein drucklos betriebenes rühr- und inertisierbares Gefäß, z.B. ein Glaskolben, zur Durchführung des Vorversuchs verwendet werden. Die Temperatur am Ende der Reaktion sollte dabei ebenfalls zwischen 250 bis 290°C liegen.

Die oben genannten Publikationen beziehen sich zwar nur auf Produkte ohne dimerisierte Fettsäuren, aber trotzdem lassen sich aus deren Schmelzpunkten recht genaue Vorhersagen über das Schmelzverhalten der entsprechenden Copolyamide treffen, die bis zu ca. 30 Gew.-% dimerisierte Fettsäuren enthalten.

Es hat sich nämlich gezeigt, dass dimerisierte Fettsäuren in teilaromatischen Copolyamiden eine überraschend geringe Schmelzpunktdepression verursachen und das Kristallisationsverhalten nur wenig beinträchtigen. Damit ist mit den dimerisierten Fettsäuren ein Mittel bereitgestellt worden, mit dem nicht nur die Zähigkeit teilkristalliner, teilaromatischer Copolyamide erhöht wird, sondern auch deren Schmelz- und Kristallisationsverhalten (Erstarrungstemperatur und -geschwindigkeit bei gegebener Abkühlrate) weitgehend beibehalten wird.

In dieser besonders günstigen Eigenschaftskombination sind die erfindungsgemäßen Copolyamide den in der EP 0 550 314 B1 und EP 0 550 315 B1 beschriebenen Copolyamiden auf Basis Terephthatsäure, Hexamethylendiamin und Laurinlactam deutlich überlegen. Damit diese PA-6T/12-Formulierungen auf eine genügende Zähigkeit gebracht werden können, müssen sie mindestens 55 mol-% PA-12-Einheiten enthalten. Bei dieser Zusammensetzung beträgt der Schmelzpunkt allerdings nur noch 245°C und die Erstarrungsgeschwindigkeit ist vergleichsweise gering.

Die erfindungsgemäßen Copolyamide können zur Regelung ihres Molekulargewichts selbstverständlich kleine Mengen aliphatischer, cycloaliphatischer oder aromatischer Monocarbonsäuren und/oder Monoamine enthalten, die den Komponenten vor oder während der Polykondensation zugesetzt werden. Ihre Herstellung geschieht nach bekannten Verfahren, wie sie beispielsweise in der US 4,831,108, US 5,098,940, US 5,708,125, EP 0 550 315 B1 oder der DE 4,329,676 C1 beschrieben sind.

Ferner ist es möglich die erfindungsgemäßen Copolyamide je nach ihrer Verwendung auf verschiedene Weise weiter zu modifizieren. So ist bei den Copolyamiden, welche durch thermoplastische Verarbeitungsverfahren wie Spritzgießen, Spritzgießschweißen, Extrusion, Coextrusion, Blasformen, Tiefziehen und vergleichbare Verarbeitungsverfahren zu den entsprechenden Gegenständen umgearbeitet werden, der Zusatz von Verstärkungsmitteln und Füllstoffen wie Glasfasern, Kohlefasern, Mineralien (u. a. Schichtsilikaten) und anderen Modifizierungsmitteln, beispielsweise Hitzestabilisatoren, UV-Stabilisatoren, Antistatikmitteln, flammhemmenden Additiven, Gleit- oder Entformungsmitteln, gängige Praxis. Zu den genannten thermoplastischen Verarbeitungsverfahren sollen noch folgende Varianten erwähnt werden: Herstellung von Hart-Weich-Verbunden z. B. durch Spritzgießen oder Extrusion, sequentielle Coextrusion (z. B. gemäß EP 0 659 534 B1), sequentielle Extrusionsblasformen (z. B. gemäß EP 0 659 535 B1), 3D-Blasformen, Coextrusionsblasformen, Coextrusions-3D-Blasformen, Coextrusions-Saugblasformen, Spritzgießen mit Gasinnendrucktechnik (GIT) und Wasserinnendrucktechnik (WIT). Bei der Hitze- und UV-Stabilisierung kann unter anderem auf die Methoden und Additive zurückgegriffen werden, wie sie in der DE 195 37 614 C2 oder der EP 0 818 491 B2 beschrieben sind. Die erfindungsgemäßen Copolyamide können weiterhin mit anderen Polymeren vermischt werden, z.B. anderen teilaromatischen oder aliphatischen Polyamiden, z.B. PA12 oder PA66, oder mit Polyolefinen, die mit polaren bzw. reaktiven Gruppen, wie z.B. Carboxylgruppen, Anhydridgruppen, Imidgruppen oder Glycidyl(meth)acrylatgruppen versehen sind. Bei diesen funktionalisierten Polyolefinen handelt es sich insbesondere um Copolymere mit (i) einem Monomeren von Ethylen oder α-Olefin oder gegebenenfalls einem Diolefin und (ii) mindestens einem Comonomeren, das unter Vinylestern, gesättigten Carbonsäuren, ungesättigten Mono- und Dicarbonsäuren, deren Estern und Salzen, sowie Dicarbonsäureanhydriden (bevorzugt Maleinsäureanhydrid) ausgewählt ist. Die funktionalisierten Polyolefine wirken unter anderem als Viskositätsmodifikatoren. Ausgangsbasis für funktionalisierte Polyolefine sind z. B. Polyethylene (HDPE, LDPE, LLDPE), Ethylen/Propylen-, Ethylen/1-Buten-Copolymere, EPM, EPDM, SBS, SIS und SEBS.

Die Herstellung der erfindungsgemäßen Copolyamide kann nach bekannten Verfahren erfolgen. Stellvertretend ist auf die US 5,708,125 und US 4,831,108 zu verweisen.

Die Erfindung betrifft weiterhin Formkörper hergestellt aus oder mit Copolyamiden wie vorstehend beschreiben. Als besonders geeignet hat es sich erwiesen, die Copolyamide für Hart-Weich-Verbunde einzusetzen.

### Beispiele:

Die folgenden Beispiele erläutern die Erfindung. Alle Produkte wurden nach einem mehrstufigen Verfahren hergestellt. Die Vorkondensatherstellung wurde nach dem in der US 5,708,125 beschriebenen Verfahren durchgeführt, die Nachkondensation in der Schmelze entsprach unter anderem dem in der US 4,831,108 beschriebenen Verfahren.

In der ersten Stufe wird zunächst bei 190°C eine wässrige Lösung der Komponenten mit 20-30 Gew.-% Wasser in einem mit Stickstoff inertisierbaren, gerührten Druckgefäß (V = 20 ltr) hergestellt. Bei dieser Temperatur wird zwei Stunden gerührt, bis sich ein Druck von etwa 1,0 MPa eingestellt hat. Nach Beendigung dieser Stufe wird die Lösung aus dem Vorlagegefäß unter Druck in einen 20 ltr-Rührautoklaven abgelassen und dort auf 260°C aufgeheizt, wobei durch wiederholtes Öffnen eines Abgasventils der Druck bei 3,3 MPa gehalten wird. Sobald nach etwa 2 Stunden - auch ohne weitere Betätigung des Ventils - der Druck konstant bleibt, wird das Bodenventil geöffnet und die Vorkondensat-Lösung abgelassen und in einen Zyklon versprüht. Dabei verdampft ein Grossteil des Wassers und es bleiben unregelmäßig geformte Partikel des betreffenden Vorkondensats zurück, die bei 80°C im Vakuum getrocknet und anschließend zu einem Pulver vermahlen werden.

Zur Erzeugung der hochmolekularen Copolyamide werden die Vorkondensate in der Schmelze in einem gleichläufigen Doppelschneckenextruder vom Typ ZSK 25 (Fabrikat der Fa. Werner & Pfleiderer; Stuttgart, D) unter folgenden Bedingungen
nachkondensiert. Die hochviskose Polymerschmelze wird als Strang abgezogen,
abgekühlt und granuliert
# Vorkondensatdosierung und -durchsatz: 4 kg/h
# Schneckendrehzahl: 100 UPM
# Temperaturen (Zone 1-12):
30/40/100/300/350/370/370/370/370/370/ 360/330 und 330°C
# Entgasung: Zone 10 unter N₂
# Trocknung des Granulats: 24 Stunden bei 100°C im Vakuum

Die Lösungsviskosität von Vorkondensat und fertigem Copolyamid wurde in 0,5 Gew.-%iger Lösung in m-Kresol bei 20°C bestimmt. Die Bestimmung der Endgruppen-Konzentrationen erfolgte mittels acidimetrischer Titration. Die Aminoendgruppen wurden in m-Kresol/iso-Propanol-2:1 (Gew.-Teile) als Lösungsmittel mit 0,1-normaler ethanolischer Perchlorsäure titriert. Die Titration der Carboxylendgruppen erfolgte in einem ortho-Kresol/Benzylalkohol-Gemisch als Lösungsmittel mit 0,1-normalem tert-Butylammoniumhydroxid.

Die DSC-Messungen wurden mit dem Gerät der Firma TA-Instruments, Typ Universal V2.3C durchgeführt.

Zur Messung des Zug-Elastizitätsmoduls und der Reißdehnung wurde Zugversuche an spritzgegossenen Zugstäben gemäß ISO 527 durchgeführt. Die Messung von Schlag- bzw. Kerbschlagzähigkeit wurde nach ISO 179/2-1eU bzw. ISO 179/2-1eA an spritzgegossenen Prüfkörpern entsprechender Geometrie durchgeführt.

Die in den Beispielen verwendeten Abkürzungen haben folgende Bedeutung:

| | |
|---|---|
| TPS | Terephthalsäure |
| HMD | Hexamethylendiamin |
| P1012 | Pripol 1012 (= C₃₆-Dimersäure) |
| IPS | Isophthalsäure |
| ADS | Adipinsäure |
| ALS | ω-Aminolaurinsäure |
| NHP | Natriumhypophosphit (NaH₂PO₂) |
| WW | Weichwasser |
| RV | Relative Lösungsviskosität in 0,5%-iger Lösung in m-Kresol bei 20°C |
| [C] | Carboxylendgruppenkonzentration in meq/kg |
| [A] | Aminoendgruppenkonzentration in meq/kg |
| SMP | DSC-Schmelzpunkt (°C) |
| SZ | Schlagzähigkeit bei 23°C in kJ/m² |
| KSZ | Kerbschlagzähigkeit bei 23°C in kJ/m² |
| EMOD | Zug-Elastizitätsmodul in MPa |
| RD | Reißdehnung in % |

**Tabelle 1 Rezepturen**

| Beispiel | TPS | HMD | P1012 | IPS | ADS | ALS | NHP | WW |
|---|---|---|---|---|---|---|---|---|
| | [Gew.-%] | [Gew.-%] | [Gew.-%] | [Gew.-%] | [Gew.-%] | [Gew.-%] | [Gew.-%] | [Gew.-%] |
| Vgl. 1a) | 28,60 | 29,15 | | 12,25 | | | 0,02 | 29,99 |
| Vgl. 2b) | 23,10 | 30,23 | | | 16,62 | | 0,02 | 30,03 |
| Vgl. 3c) | 20,36 | 14,66 | | | | 34,95 | 0,02 | 30,00 |
| 1 * | 23,77 | 26,09 | 12,41 | 9,14 | | | 0,02 | 28,57 |
| 2 * | 21,03 | 28,59 | 6,80 | | 14,99 | | 0,02 | 28,57 |
| 3 | 21,10 | 19,00 | 18,15 | | | 11,71 | 0,02 | 30,01 |

| | | | | | | | | |
|---|---|---|---|---|---|---|---|---|
| a) gemäß EP 0 360 611 B1 (MITSUI) b) gemäß EP 0 449 466 B1 (MITSUI) c) gemäß EP 0 550 314 B1 (ELF ATOCHEM S.A.) | | | | | | | | |

**Tabelle 2: Relative Viskositäten, Endgruppen und DSC-Schmelzpunkte**

| Beispiel | Vorkondensat | | | Copolyamid | |
|---|---|---|---|---|---|
| | RV | [ A ] | [ C ] | RV | SMP |
| Vgl.1 | 1,137 | --- | --- | 1,91 | 330 |
| Vgl.2 | 1,125 | --- | --- | 1,93 | 315 |
| Vgl.3 | 1,122 | 1410 | 1247 | 1,87 | 248 |
| 1 * | 1,107 | 1588 | 1378 | 1,82 | 323 |
| 2 * | 1,141 | 1184 | 1010 | 1,98 | 305 |
| 3 | 1,119 | 1470 | 1297 | 1,84 | 294 |

| | | | | | |
|---|---|---|---|---|---|
| * nicht erfindungsgemäß | | | | | |

**Tabelle 3: Mechanische Eigenschaften der Copolyamide im trockenen Zustand**

| Beispiel | SZ | KSZ | EMOD | RD |
|---|---|---|---|---|
| Vgl.1 | 58 | 4 | 3900 | 2 |
| Vgl.2 | 97 | 5 | 4000 | 3 |
| Vgl.3 | 40 % o.B. | 7 | 3300 | 5 |
| 1 * | 60 % o.B. | 10 | 3100 | 4 |
| 2 * | o.B. | 10 | 3060 | 6 |
| 3 | o.B. | 12 | 2700 | 9 |

| | | | | |
|---|---|---|---|---|
| o.B.: ohne Bruch * nicht erfindungsgemäß | | | | |

## Patentansprüche

1. Teilkristalline, thermoplastisch verarbeitbare, teilaromatische Copolyamide, herstellbar durch Kondensation von mindestens den folgenden Monomeren bzw. deren Vorkondensaten:
a) Terephthalsäure
b) wenigstens einer dimerisierten Fettsäure mit bis zu 44 Kohlenstoffatomen und
c) wenigstens eines aliphatischen Diamins der Formel H₂N-(CH₂)ₓ-NH₂, worin x = 6 ist,
**dadurch gekennzeichnet, dass** der Schmelzpunkt dieser Copolyamide, gemessen mittels DSC (Differential Scanning Calorimetry), höchstens 335 °C beträgt und dass neben den Monomeren a), b) und c) Laurinlactam (f) oder ω-Aminododecansäure (f) vorhanden ist und der Schmelzpunkt dieser Copolyamide, gemessen mittels DSC, mindestens 255 °C beträgt.

2. Copolyamide nach Anspruch 1,
**dadurch gekennzeichnet, dass** eine weitere aromatische Dicarbonsäure d) mit 8-12 C-Atomen vorhanden ist.

3. Copolyamide nach einem der Ansprüche 1 bis 2,
**dadurch gekennzeichnet, dass** zusätzlich eine aliphatische Dicarbonsäure e) mit 6-18 C-Atomen vorhanden ist.

4. Copolyamide nach einem der Ansprüche 2 oder 3,
**dadurch gekennzeichnet, dass** die aromatische Dicarbonsäure d) Isophthalsäure ist.

5. Copolyamide nach einem der Ansprüche 3 oder 4,
**dadurch gekennzeichnet, dass** die aliphatische Dicarbonsäure e) Adipinsäure ist.

6. Verwendung der Copolyamide nach einem der Ansprüche 1 bis 5
zur Herstellung von Formkörpern mittels thermoplastischer Verarbeitungsverfahren.

7. Verwendung der Copolyamide nach Anspruch 6, wobei als Formkörper Hart-Weich-Verbunde hergestellt werden.

8. Verwendung der Copolyamide nach Anspruch 6 oder 7, wobei das Verarbeitungsverfahren ausgewählt ist aus Extrusion, Spritzgießen, Coextrusion, Blasformen, Tiefziehen, sequentielle Coextrusion, sequentielles Extrusionsblasformen, 3D-Blasformen, Coextrusionsblasformen, Coextrusions-3D-Blasformen und Coextrusions-Saugblasformen.

9. Formkörper hergestellt aus oder mit Copolyamiden gemäß einem der Ansprüche 1 bis 5.

10. Formkörper nach Anspruch 9, **dadurch gekennzeichnet, dass** er ein Hart-Weich-Verbund ist.

## Claims

1. Partially crystalline, thermoplastically processable, partially aromatic copolyamides which can be produced by condensation of at least the following monomers or precondensates thereof:
a) terephthalic acid
b) at least one dimerised fatty acid having up to 44 carbon atoms and
c) at least one aliphatic diamine of the formula H₂N-(CH₂)ₓ-NH₂, where x = 6,
**characterised in that** the melting point of these copolyamides, measured by means of DSC (Differential Scanning Calorimetry), is at most 335°C and **in that**, besides the monomers a), b) and c), laurin lactam (f) or ω-aminododecanoic acid (f) is present and the melting point of these copolyamides, measured by means of DSC, is at least 255°C.

2. Copolyamides according to Claim 1,
**characterised in that** a further aromatic dicarboxylic acid d) having 8-12 C atoms is present.

3. Copolyamides according to one of Claims 1 to 2,
**characterised in that** an aliphatic dicarboxylic acid e) having 6-18 C atoms is additionally present.

4. Copolyamides according to one of Claims 2 or 3,
**characterised in that** the aromatic dicarboxylic acid d) is isophthalic acid.

5. Copolyamides according to one of Claims 3 or 4,
**characterised in that** the aliphatic dicarboxylic acid e) is adipic acid.

6. Use of the copolyamides according to one of Claims 1 to 5
for producing mouldings by means of thermoplastic processing methods.

7. Use of the copolyamides according to Claim 6, in which hard-soft composites are produced as the mouldings.

8. Use of the copolyamides according to Claim 6 or 7, in which the processing method is selected from extrusion, injection moulding, coextrusion, blow moulding, thermoforming, sequential coextrusion, sequential extrusion blow moulding, 3D blow moulding, coextrusion blow moulding, coextrusion 3D blow moulding and coextrusion suction blow moulding.

9. Mouldings produced from or using copolyamides according to one of Claims 1 to 5.

10. Moulding according to Claim 9, **characterised in that** it is a hard-soft composite.

## Revendications

1. Copolyamides partiellement cristallins, partiellement aromatiques, pouvant être transformés thermoplastiquement, préparables par condensation à partir d'au moins les monomères, respectivement les précondensats suivants :
a) acide téréphtalique
b) au moins un acide gras dimérisé avec jusqu'à 44 atomes de carbone et
c) au moins une diamine aliphatique de la formule H₂N-(CH₂)ₓ-NH₂, dans laquelle x = 6,
**caractérisés en ce que** le point de fusion de ces copolyamides, mesuré par DSC (Differential Scanning Calorimetry = calorimétrie différentielle à balayage) est d'au plus 335 °C et **en ce qu'**il y a en plus des monomères a), b) et c) du lactame laurique (f) ou de l'acide ω-amino-dodécanoïque (f), et **en ce que** le point de fusion de ces copolyamides, mesurée par DSC, est d'au moins 255 °C.

2. Copolyamides selon la revendication 1,
**caractérisés en ce qu'**il y a un autre acide aromatique dicarboxylique d) avec 8 à 12 atomes de C.

3. Copolyamides selon l'une quelconque des revendications 1 à 2, **caractérisés en ce qu'**il y a en plus un acide dicarboxylique aliphatique e) avec 6 à 18 atomes de C.

4. Copolyamides selon l'une quelconque des revendications 2 ou 3, **caractérisés en ce que** l'acide aromatique dicarboxylique d) est de l'acide isophtalique.

5. Copolyamides selon l'une quelconque des revendications 3 ou 4, **caractérisés en ce que** l'acide dicarboxylique aliphatique e) est de l'acide adipique.

6. Utilisation des copolyamides selon l'une quelconque des revendications 1 à 5 à la fabrication de corps moulés au moyen de procédés de transformation thermoplastiques.

7. Utilisation des copolyamides selon la revendication 6, des composites rigides-souples étant fabriqués comme corps moulés.

8. Utilisation des copolyamides selon la revendication 6 ou 7, le procédé de transformation étant choisi parmi l'extrusion, l'injection, la coextrusion, le soufflage, l'emboutissage, la coextrusion séquentielle, l'extrusion-soufflage séquentielle, le soufflage 3D, la coextrusion-soufflage, la coextrusion-soufflage 3D et la coextrusion-aspiration-soufflage.

9. Corps moulé fabriqué en ou avec des polyamides selon l'une quelconque des revendications 1 à 5.

10. Corps moulé selon la revendication 9, **caractérisé en ce qu'**il est un composite rigide-souple.
